# EUROPEAN PATENT APPLICATION

(11) **EP 4 832 529 A1**
(43) Date of publication of application: **28.10.2026**
(21) Application number: 23962212.9
(22) Date of filing: 20.12.2023
(51) Int. Cl.: H04W 8/26, H04W 48/18

(54) **SERVICE NODE**

(71) Applicant: NTT DOCOMO, INC., Tokyo 100-6150 (JP)
(72) Inventor: MIN Tianyang, Tokyo 100-6150 (JP); MINOKUCHI Atsushi, Tokyo 100-6150 (JP)
(74) Representative: Hoffmann Eitle
(86) International application number: PCT/JP2023/045797
(87) International publication number: WO 2025/134291

(57) **Abstract**

A service node includes: a control unit that controls, in a radio access network divided in units of services, communication with another service node connected to the service node, which is a unit providing the service; and a transmission unit that transmits an identifier to the other service node, wherein at least one of the service node or the other service node includes a control service node in which a control plane of a central unit centrally controlling the radio access network is divided in units of services, and the transmission unit transmits, as the identifier, a first identifier with which the service node identifies a terminal and a second identifier with which the other service node identifies the terminal.

## Description

### TECHNICAL FIELD

The present disclosure relates to a service node providing a service in an SBA based RAN.

### BACKGROUND ART

The 3rd Generation Partnership Project (3GPP: registered trademark) has specified the 5th generation mobile communication system (also referred to as 5G, New Radio (NR), or Next Generation (NG)), and is also proceeding with the specification of the next generation called Beyond 5G, 5G Evolution, or 6G.

A 5G core network (5GC) is configured based on a service based architecture (SBA). That is, network functions of the 5GC are divided in units of services (for example, Access and Mobility Management Function (AMF), Session Management Function (SMF)). Due to such an SBA, the 5GC can flexibly change its configuration.

On the other hand, a 5G radio access network (5G RAN) has a configuration in which each node is connected by peer to peer (p2p) instead of the SBA. In the case of such a configuration, a network function realized by a node tends to depend on a hardware configuration. Therefore, when a new network function is adopted in the 5G RAN, it was necessary to maintain backward compatibility with an existing network function. Due to such a configuration, the cost of the 5G RAN increases, and it has been difficult to flexibly change the configuration thereof. Therefore, in 6G, adoption of a RAN based on the SBA (SBA based RAN) has been studied (Non-Patent Literature 1).

### CITATION LIST

### NON-PATENT LITERATURE

Non-Patent Literature 1: N. Li et al., "Micro-service-based radio access network", China Communications, vol. 19, no. 3, pp. 1-15, March 2022

### SUMMARY OF INVENTION

In an SBA based RAN, it is conceivable to divide at least a part of existing nodes (for example, Distributed Unit (DU), Central Unit-Control Plane (CU-CP), Central Unit-User Plane (CU-UP)) configuring a base station (hereinafter, also referred to as a gNodeB (gNB)) in units of services. Hereinafter, each unit into which a node is divided in units of services is also referred to as a service node or an entity. Note that, in a case where a part of existing nodes is divided into service nodes and other nodes are not divided, the other nodes may be read as service nodes.

When an existing node is divided into a plurality of service nodes, for example, a need arises to newly define an identifier (UE ID) of a terminal (hereinafter, also referred to as a User Equipment (UE)) connected to a RAN among the service nodes. However, the existing UE ID identifies the same UE between nodes and was included in a message for an inter-node interface, so that it was difficult to divert it to the identification of the UE among the service nodes. In particular, when a CU-CP is divided, it is expected that the number of service nodes becomes large due to the diversity of its functions, and therefore identification of the UE among the service nodes can be an issue to be prioritized in the realization of a 6G RAN.

In addition, when an existing node is divided into a plurality of service nodes, it is considered that a need arises to newly define a service instance among the service nodes. A service instance is an entity that provides a service, but here means a protocol that realizes a service. For example, service instances between nodes are inter-node interfaces such as XnAP and F1AP. Information for identifying a service instance between nodes (service instance ID) was also included in a message for an inter-node interface, so that it was difficult to divert it to the identification of the service instance among the service nodes.

Furthermore, in RAN sharing in which a RAN is shared among operators, when a user changes an operator, it is necessary to recognize in the RAN that the user changes the operator. The operator is identified by an identifier (PLMN ID) of a network (Public Land Mobile Network, PLMN) provided by the operator. Therefore, the change of the operator in the RAN sharing involves a change of the PLMN ID. Therefore, the RAN needs to recognize an identifier of a PLMN of a transition source of a UE (source PLMN ID) and an identifier of a PLMN of a transition target of the UE (target PLMN ID).

Even in such a situation, when an existing node is divided into a plurality of service nodes, a need arises to share the source PLMN ID and the target PLMN ID among service nodes configuring the RAN, but for the same reason as the identification of the UE and the identification of the service instance described above, it was difficult to divert a mechanism for sharing the source PLMN ID and the target PLMN ID among nodes to that among service nodes.

Accordingly, an object of the present disclosure is to provide a service node capable of identifying a UE, a service instance, and a network provided by an operator among service nodes even when an existing node is divided into a plurality of service nodes.

One aspect of the disclosure is a service node including a control unit (control unit 170) that controls, in a radio access network divided in units of services, communication with another service node connected to the service node, which is a unit providing the service, and a transmission unit (radio signal transmission/reception unit 110) that transmits an identifier to the other service node, wherein at least one of the service node or the other service node includes a control service node in which a control plane of a central unit centrally controlling the radio access network is divided in units of services, and the transmission unit transmits, as the identifier, a first identifier with which the service node identifies a terminal and a second identifier with which the other service node identifies the terminal.

One aspect of the disclosure is a service node including a control unit (control unit 170) that controls, in a radio access network divided in units of services, communication with another service node connected to the service node, which is a unit providing the service, and a transmission unit (radio signal transmission/reception unit 110) that transmits an identifier to the other service node, wherein at least one of the service node or the other service node includes a control service node in which a control plane of a central unit centrally controlling the radio access network is divided in units of services, and the transmission unit transmits, as the identifier, an identifier of an interface used for the communication.

One aspect of the disclosure is a service node including a control unit (control unit 170) that controls, in a radio access network divided in units of services, communication with another service node connected to the service node, which is a unit providing the service, and a transmission unit (radio signal transmission/reception unit 110) that transmits an identifier to the other service node, wherein at least one of the service node or the other service node includes a control service node in which a control plane of a central unit centrally controlling the radio access network is divided in units of services, and the transmission unit transmits, as the identifier, an identifier of a network provided by an operator of a transition source of a terminal and an identifier of a network provided by an operator of a transition target of the terminal.

### BRIEF DESCRIPTION OF DRAWINGS

[Fig. 1] Fig. 1 is an overall schematic configuration diagram of a radio communication system.
[Fig. 2] Fig. 2 is a diagram showing frequency ranges used in the radio communication system.
[Fig. 3] Fig. 3 is a diagram showing a configuration example of a radio frame, a subframe, a slot, and a symbol used in the radio communication system.
[Fig. 4] Fig. 4 is a functional block diagram of a base station (service node).
[Fig. 5] Fig. 5 is a functional block diagram of a terminal.
[Fig. 6] Fig. 6 is a diagram showing a configuration example of an SBA based RAN and a CN.
[Fig. 7] Fig. 7 is a diagram showing another configuration example of the SBA based RAN and the CN.
[Fig. 8] Fig. 8 is a diagram showing transmission and reception of an identifier of a terminal between service nodes (entities).
[Fig. 9] Fig. 9 is a diagram showing transmission and reception of an identifier of a communication interface between service nodes (entities).
[Fig. 10] Fig. 10 is a diagram showing transmission and reception of an identifier of a PLMN between service nodes (entities).
[Fig. 11] Fig. 11 is a diagram showing an example of a hardware configuration of a base station and a terminal.
[Fig. 12] Fig. 12 is a diagram showing a configuration example of a vehicle.

### DESCRIPTION OF EMBODIMENTS

Hereinafter, embodiments will be described based on the drawings. Note that the same or similar reference numerals are attached to the same functions and configurations, and the description thereof will be omitted as appropriate.

### (1) Configuration of radio communication system

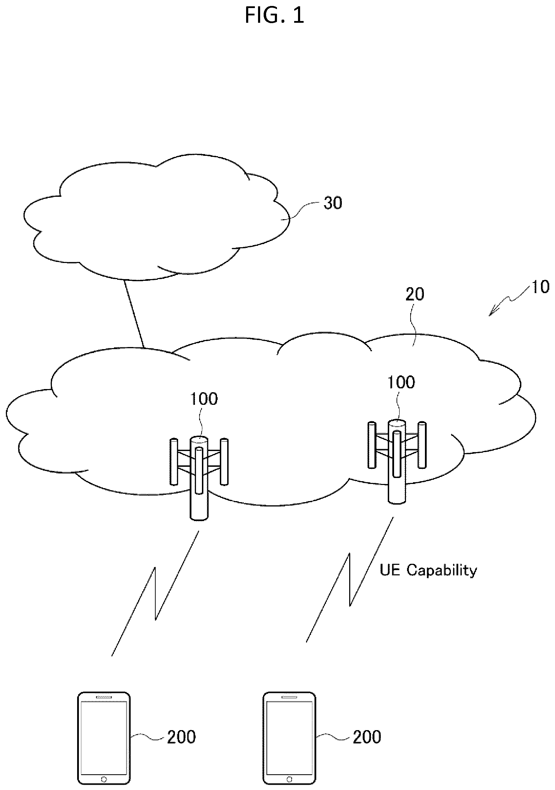

The radio communication system 10 shown in Fig. 1 is a radio communication system according to a system called 5G. On the other hand, the radio communication system 10 may be a radio communication system according to a system called Beyond 5G, 5G Evolution, or 6G.

The radio communication system 10 can support Massive Multiple-Input Multiple-Output (Massive MIMO) that generates a beam with higher directivity by controlling radio signals transmitted from a plurality of antenna elements, carrier aggregation (CA) that uses a plurality of component carriers (CCs) bundled together, dual connectivity (DC) that performs simultaneous communication with two base stations, and the like.

As shown in Fig. 1, the radio communication system 10 includes a Radio Access Network (RAN) 20, a base station 100 (hereinafter, also referred to as a gNodeB (gNB) 100) connected to the RAN 20, and a terminal 200 (hereinafter, also referred to as a User Equipment (UE) 200) that performs radio communication with the gNB 100. The RAN 20 is connected to a core network (CN) 30. The RAN 20 and the CN 30 may be simply expressed as a "network". In addition, it may be understood that the gNB 100 is included in the RAN 20. Note that a specific configuration of the radio communication system 10, for example, the numbers of gNBs 100 and UEs 200, is not limited to the example shown in Fig. 1.

The gNB 100 may be a base station having a Centralized-Radio Access Network (C-RAN) configuration including a distributed unit (DU) having a function for connecting to the UE 200, and a central unit (CU) having a function for connecting to a network. In this case, the CU may be further divided into a control plane (CU-CP) and a user plane (CU-UP).

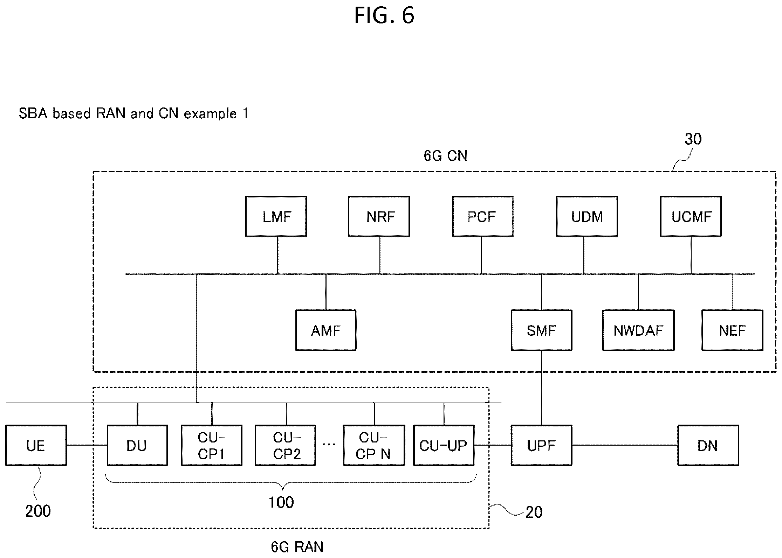

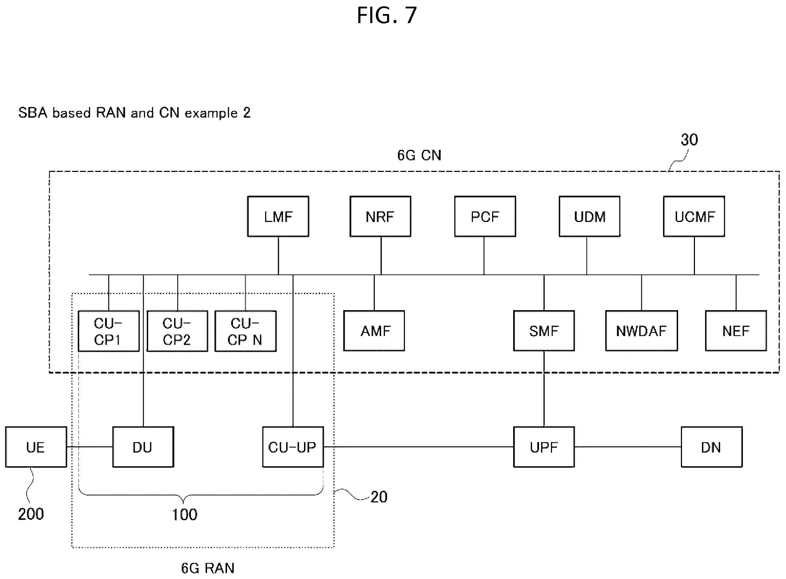

The RAN 20 (specifically, the gNB 100 configuring the RAN 20) may be divided in units of services provided by the RAN 20. For example, when the gNB 100 is configured by existing nodes called the DU, the CU-CP, and the CU-UP described above, the CU-CP may be divided in units of N services to be CU-CP 1, CU-CP 2, ..., CU-CP N (see Fig. 6 and Fig. 7). In addition, the node divided in units of services is not limited to the CU-CP, and may be the CU-UP or the DU. In this case, each unit of service may be referred to as a service node.

Note that, in a case where a part of existing nodes is divided into service nodes and other nodes are not divided, the other nodes may be read as service nodes. For example, when the CU-CP is divided into N service nodes of CU-CP 1, CU-CP 2, ..., CU-CP N, the DU and the CU-UP may be existing nodes and simultaneously service nodes.

The service node may be referred to as an entity. In addition, the service node may be referred to as a sub-node in view of being a lower node when each of the DU, the CU-CP, and the CU-UP is regarded as a node. Alternatively, the service node may be referred to as a function or a network function following the SBA in the 5G CN.

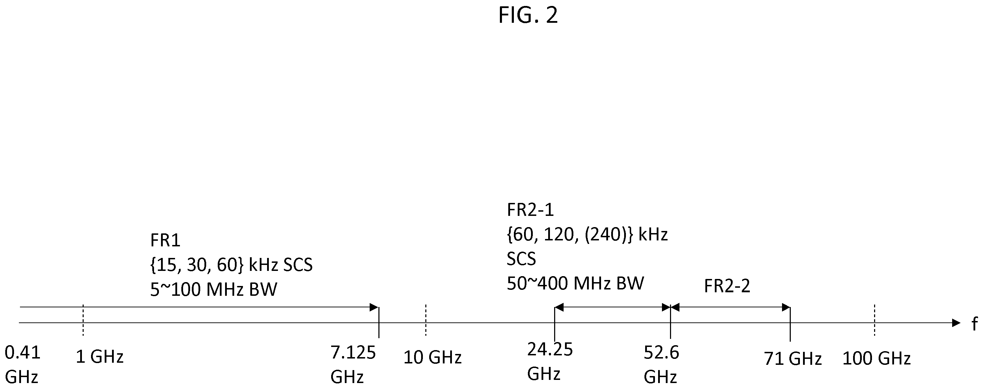

In addition, the radio communication system 10 may support a plurality of frequency ranges (FRs). That is, as shown in Fig. 2, the following FRs may be supported.
- FR1: 410 MHz to 7.125 GHz
- FR2-1: 24.25 GHz to 52.6 GHz
- FR2-2: Over 52.6 GHz to 71 GHz

In FR1, a subcarrier spacing (SCS) of 15, 30, or 60 kHz and a bandwidth (BW) of 5 to 100 MHz may be used. In FR2-1, an SCS of 60 or 120 kHz (240 kHz may be included) and a BW of 50 to 400 MHz may be used.

In FR2-2, Cyclic Prefix-Orthogonal Frequency Division Multiplexing (CP-OFDM) or Discrete Fourier Transform-Spread-Orthogonal Frequency Division Multiplexing (DFT-S-OFDM) having a larger SCS may be applied in order to avoid an increase in phase noise.

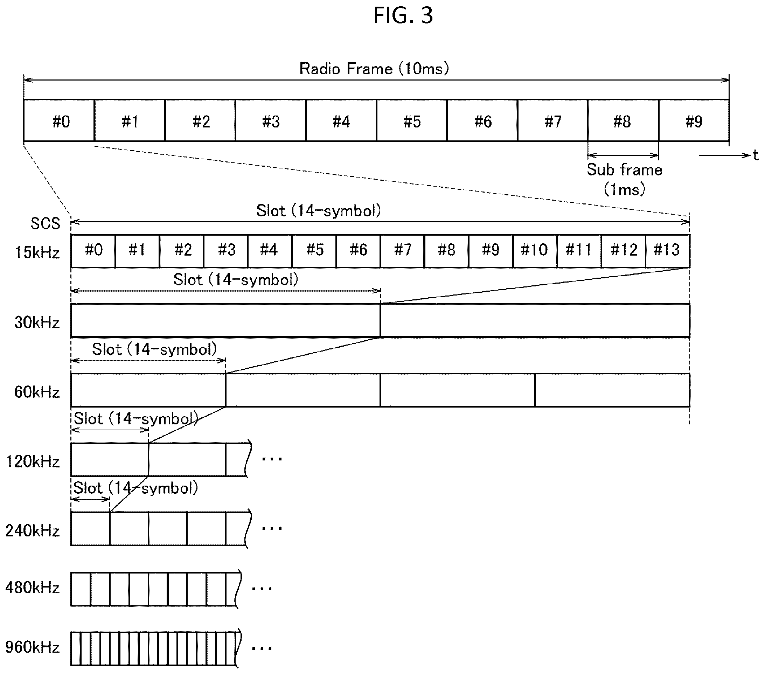

In addition, as shown in Fig. 3, one slot in the radio communication system 10 is configured by 14 symbols. When this configuration is maintained, as the SCS becomes larger (wider), a symbol period (and a slot period) becomes shorter. Note that the SCS is not limited to the frequencies shown in Fig. 3, and may be a frequency such as 480 kHz or 960 kHz, for example.

In addition, the number of symbols configuring one slot does not necessarily have to be 14 symbols, and may be, for example, 28 or 56 symbols. Furthermore, the number of slots per subframe may vary depending on the SCS.

### (2) Functional block configuration of radio communication system

### (2.1) Functional block configuration of base station

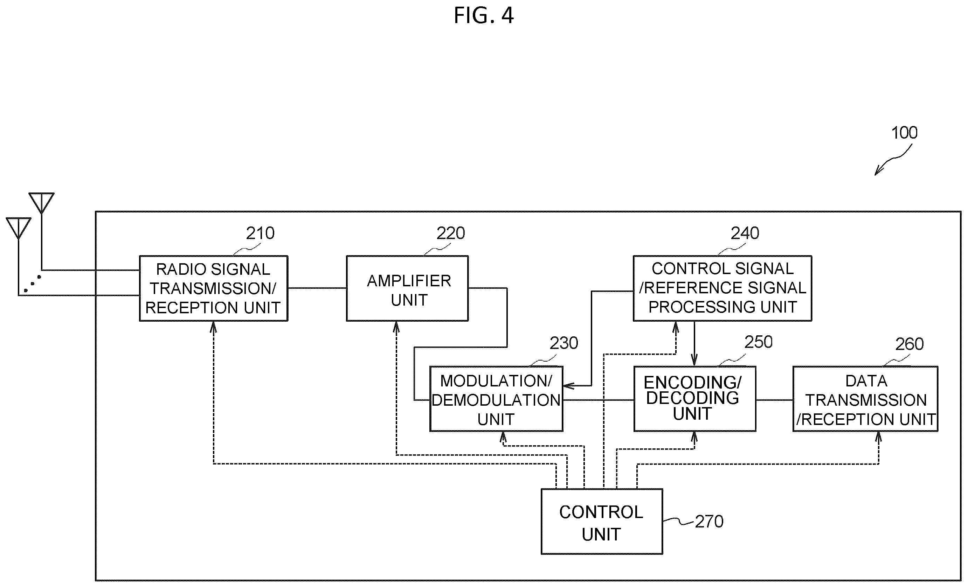

As shown in Fig. 4, the gNB 100 comprises a radio signal transmission/reception unit 110, an amplifier unit 120, a modulation/demodulation unit 130, a control signal/reference signal processing unit 140, a encoding/decoding unit 150, a data transmission/reception unit 160, and a control unit 170.

Each configuration of the gNB 100 in the following description is assumed to be each configuration of a service node obtained by dividing a node such as the DU, the CU-CP, and the CU-UP configuring the gNB 100 in units of services. In the following, as an example, it is assumed that the CU-CP, that is, the control plane of the central unit that centrally controls the RAN 20 is divided in units of services, and the DU and the CU-UP are not divided. In addition, a service node formed by dividing the CU-CP is also referred to as a control service node. As described above, when only a part of nodes configuring the gNB 100 is divided in units of services, other nodes can be regarded as service nodes, and therefore, service nodes configuring the gNB 100 are the DU, CU-CP 1, CU-CP 2, ..., CU-CP N, and CU-UP.

As described above, one service node configuring the gNB 100 may include a control service node, and may not include a control service node. In the latter case, one of the other service nodes configuring the gNB 100 is a control service node. That is, at least one of the service node or the other service node includes a control service node.

The radio signal transmission/reception unit 110 transmits and receives a radio signal to and from the UE 200. The radio signal transmission/reception unit 110 may configure a transmission unit that transmits a radio signal to the UE 200 and a reception unit that receives a radio signal from the UE 200. The radio signal may include data, and may be read as data. Transmission may be read as configuration, instruction, notification, and the like. Reception may be read as report (reported), notification (notified), and the like. Note that the configuration may be realized by configuration information (Information Element (IE)) of a Radio Resource Control (RRC) layer, and the instruction may be realized by a Control Element (CE) of a Medium Access Control (MAC) layer and Downlink Control Information (DCI).

The radio signal transmission/reception unit 110 of the embodiment may transmit an identifier to another service node. The identifier may be a UE ID identifying the UE 200 within the service node. That is, the radio signal transmission/reception unit 110 may transmit, as the identifier, an identifier with which a service node comprising the the radio signal transmission/reception unit 110 identifies the UE 200 (hereinafter, also referred to as a first identifier) and an identifier with which another service node identifies the UE 200 (hereinafter, also referred to as a second identifier).

The radio signal transmission/reception unit 110 of the embodiment may transmit another identifier to another service node. The identifier in this case may be an identifier of an interface used for communication with another service node or the CN 30 (specifically, a function in the CN 30 such as an AMF). The identifier of the interface may mean a protocol used for the communication. Note that the identifier of the interface may be referred to as an identifier of a service instance.

The radio signal transmission/reception unit 110 of the embodiment may transmit another identifier to another service node. The identifier in this case may be an identifier of a PLMN of a transition source of the UE 200 (source PLMN ID) and an identifier of a PLMN of a transition target of the UE 200 (target PLMN ID).

The radio signal transmission/reception unit 110 of the embodiment may transmit the above-described identifiers, that is, the first identifier and the second identifier, to the CN 30 connected to the RAN 20.

The radio signal transmission/reception unit 110 of the embodiment may transmit identifiers used for scheduling configuration of the UE 200, that is, the first identifier and the second identifier. The identifier in this case may be, for example, a Configured Scheduling-Radio Network Temporary Identifier (CS-RNTI).

The amplifier unit 120 is configured by a Power Amplifier (PA) / Low Noise Amplifier (LNA) or the like. The amplifier unit 120 amplifies the radio signal output from the radio signal transmission/reception unit 110. In addition, the amplifier unit 120 amplifies the radio signal output from the modulation/demodulation unit 130.

The modulation/demodulation unit 130 executes data modulation/demodulation, transmission power configuration, resource block allocation, and the like for each predetermined communication destination (the UE 200 or another UE). In the modulation/demodulation unit 130, CP-OFDM/DFT-S-OFDM may be applied. In addition, DFT-S-OFDM may be used not only for an uplink (UL) but also for a downlink (DL).

The control signal/reference signal processing unit 140 executes processing relating to a control signal transmitted and received to and from the UE 200, for example, Radio Resource Control (RRC) signaling.

The control signal/reference signal processing unit 140 executes processing relating to a reference signal transmitted and received to and from the UE 200, for example, a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS).

Note that channels include a control channel and a data channel. The control channel includes a Physical Uplink Control Channel (PUCCH), a Physical Downlink Control Channel (PDCCH), a Physical Random Access Channel (PRACH), a Physical Broadcast Channel (PBCH), and the like. The data channel includes a Physical Uplink Shared Channel (PUSCH), a Physical Downlink Shared Channel (PDSCH), and the like.

The encoding/decoding unit 150 executes division/concatenation and coding/decoding of data included in the radio signal for each predetermined communication destination (the UE 200 or another UE).

Specifically, the encoding/decoding unit 150 decodes data output from the modulation/demodulation unit 130, and concatenates the decoded data. In addition, the encoding/decoding unit 150 divides data output from the data transmission/reception unit 160 into a predetermined size, and executes coding on the divided data.

The data transmission/reception unit 160 executes assembly/disassembly and the like of a data unit (Protocol Data Unit (PDU) / Service Data Unit (SDU)) configuring data between respective layers. The plurality of layers are a Medium Access Control (MAC) layer, a Radio Link Control (RLC) layer, a Packet Data Convergence Protocol (PDCP) layer, and the like. In addition, the data transmission/reception unit 160 executes error correction and retransmission control of data based on a Hybrid Automatic Repeat Request (HARQ).

The control unit 170 controls the gNB 100. The control unit 170 controls, for example, transmission and reception of a radio signal by the radio signal transmission/reception unit 110, amplification by the amplifier unit 120, data modulation/demodulation by the modulation/demodulation unit 130, signal processing by the control signal/reference signal processing unit 140, coding/decoding by the encoding/decoding unit 150, and assembly/disassembly of a data unit by the data transmission/reception unit 160. In addition, the control unit 170 executes scheduling for the UE 200.

The control unit 170 of the embodiment controls communication with another service node connected to a service node configured by itself in the RAN 20 divided in units of services. Note that the service node and the other service node may be understood as a unit that provides a service in the RAN 20 divided in units of services.

### (2.2) Functional block configuration of terminal

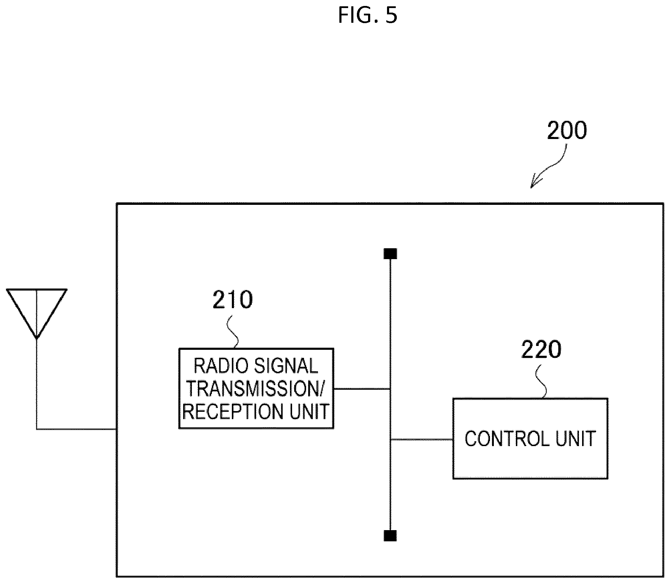

As shown in Fig. 5, the UE 200 comprises a radio signal transmission/reception unit 210 and a control unit 220.

The radio signal transmission/reception unit 210 transmits and receives a radio signal to and from the gNB 100. The radio signal transmission/reception unit 210 may configure a transmission unit that transmits a radio signal to the gNB 100 and a reception unit that receives a radio signal from the gNB 100. The radio signal may include data, and may be read as data. Transmission may be read as report, notification, and the like. Reception may be read as configuration (configured), instruction (instructed), notification (notified), and the like. Note that the configuration may be realized by configuration information (Information Element (IE)) of a Radio Resource Control (RRC) layer, and the instruction may be realized by a Control Element (CE) of a Medium Access Control (MAC) layer and Downlink Control Information (DCI).

The control unit 220 controls the UE 200. The control unit 220 controls, for example, transmission and reception of a radio signal by the radio signal transmission/reception unit 210.

### (2.3) service based architecture (SBA)

As shown in Fig. 6, in the SBA, nodes (DU, CU-CP, CU-UP) configuring the RAN 20 may be divided in units of services. Here, the CU-CP is divided in units of N services to be CU-CP 1, CU-CP 2, ..., CU-CP N. On the other hand, the node divided in units of services is not limited to the CU-CP, and may be the CU-UP or the DU.

Note that, as shown in Fig. 7, in the 6G RAN based on the SBA, the CU-CP among the nodes configuring the RAN 20 may be included in the CN. Even in this case, the CU-CP may be divided in units of N services.

### (3) Operation of radio communication system

### (3.1) Issues

### (3.1.1) Issue 1

When an existing node is divided into a plurality of service nodes, for example, a need arises to newly define an identifier (UE ID) of a UE connected to the RAN among the service nodes. However, the existing UE ID identifies the same UE between nodes and was included in a message for an inter-node interface, so that it was difficult to divert it to the identification of the UE among the service nodes. In particular, when a CU-CP is divided, it is expected that the number of service nodes becomes large due to the diversity of its functions, and therefore identification of the UE among the service nodes can be an issue to be prioritized in the realization of a 6G RAN.

### (3.1.2) Issue 2

In addition, when an existing node is divided into a plurality of service nodes, it is considered that a need arises to newly define a service instance among the service nodes. A service instance is an entity that provides a service, but here means a protocol that realizes a service. For example, service instances between nodes are inter-node interfaces such as XnAP and F1AP. Information for identifying a service instance between nodes (service instance ID) was also included in a message for an inter-node interface, so that it was difficult to divert it to the identification of the service instance among the service nodes.

### (3.1.3) Issue 3

Furthermore, in RAN sharing in which a RAN is shared among operators, when a user changes an operator, it is necessary to recognize in the RAN that the user changes the operator. The operator is identified by an identifier (PLMN ID) of a network (Public Land Mobile Network, PLMN) provided by the operator. Therefore, the change of the operator in the RAN sharing involves a change of the PLMN ID. Therefore, the RAN needs to recognize an identifier of a PLMN of a transition source of a UE (source PLMN ID) and an identifier of a PLMN of a transition target of the UE (target PLMN ID).

Even in such a situation, when an existing node is divided into a plurality of service nodes, a need arises to share the source PLMN ID and the target PLMN ID among service nodes configuring the RAN, but for the same reason as the identification of the UE and the identification of the service instance described above, it was difficult to divert a mechanism for sharing the source PLMN ID and the target PLMN ID among nodes to that among service nodes.

### (3.2) Operation examples

### (3.2.1) Operation example 1

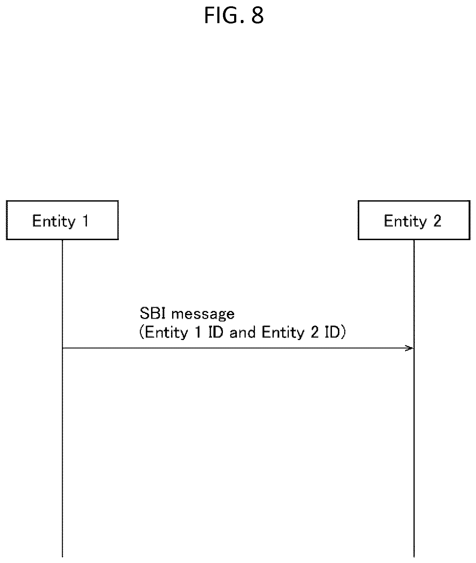

Operation example 1 will be described with reference to Fig. 8. Operation example 1 transmits and receives an identifier of the UE 200 between sub-nodes in the RAN or between a sub-node in the RAN and a function in the CN (for example, an LMF). Note that hereinafter, the sub-node in the RAN or the function in the CN is also referred to as an entity.

As shown in Fig. 8, one entity (Entity 1 in the figure) transmits a service based interface (SBI) message to the other entity (Entity 2 in the figure). The SBI message is, for example, a setup request message, a setup response message, a modification request message, or a modification response message of an xx (xx is an arbitrary name) interface. The SBI message may include one or a plurality of UE IDs in a header or a message (body).

### <Case where UE ID is transmitted and received between sub-nodes in RAN>

The UE ID is, for example, a Cell-Radio Network Temporary Identifier (C-RNTI), a Configured Scheduling RNTI (CS-RNTI), a Subscription Permanent Identifier (SUPI), a UE context management entity ID, a mobility entity ID (RRM entity ID), an RRC entity ID, a radio bearer management entity ID, a paging entity ID, a Self-Organizing Network entity ID (SON entity ID), an Artificial Intelligence/Machine Learning entity ID (AIML entity ID), a CU-CP entity ID, a CU-UP entity ID, or a DU entity ID.

For example, when one entity is a mobility entity (RRM entity) and the other entity is a SON entity, the RRM entity may include an RRM entity ID with which the RRM entity identifies the UE 200 and a SON entity ID with which the SON entity identifies the UE 200 in the header or the body of the SBI message described above and transmit the SBI message to the SON entity. Note that the SON entity may be read as a data collection entity.

### <Case where UE ID is transmitted and received between sub-node in RAN and function in CN>

The UE ID is, for example, a C-RNTI, a CS-RNTI, a SUPI, a UE context management entity ID, a mobility entity ID (RRM entity ID), an RRC entity ID, a radio bearer management entity ID, a paging entity ID, a SON entity ID, an AIML entity ID, a CU-CP entity ID, a CU-UP entity ID, a DU entity ID, an AMF ID, an SMF ID, an NWDAP ID, an LMF ID, an NEF ID, an NRF ID, a PCF ID, a UDM ID, or a UCMF ID.

For example, when one entity is a mobility entity (RRM entity) in the RAN and the other entity is an LMF entity in the CN, the RRM entity may include an RRM entity ID with which the RRM entity identifies the UE 200 and an LMF entity ID with which the LMF entity identifies the UE 200 in the header or the body of the SBI message described above and transmit the SBI message to the LMF entity.

In addition, the transmission of the UE ID described above may be performed from an entity in the CN to an entity in the RAN. In this case, the entity in the CN (for example, the LMF entity) may assign a temporary identifier to the SUPI as the LMF ID, and then use the temporary identifier. Accordingly, since the LMF entity does not need to use the SUPI as the LMF ID, it is possible to reduce a security risk as compared with a case where the SUPI is passed to the RAN as the LMF ID.

Furthermore, the LMF entity may use, as the LMF ID, a combination of the temporary identifier assigned to the SUPI as described above and an ID of the LMF instance. For example, assuming a situation in which an LMF instance realizing the LMF entity causes a failure and the LMF instance is substituted by another LMF instance (on the premise that the LMF entity is implemented by a plurality of stateless instances and one data storage), the substituted other LMF instance can search for a context coordinated with the RAN before the failure by using an ID of the failed LMF instance as a mark.

### (3.2.2) Operation example 2

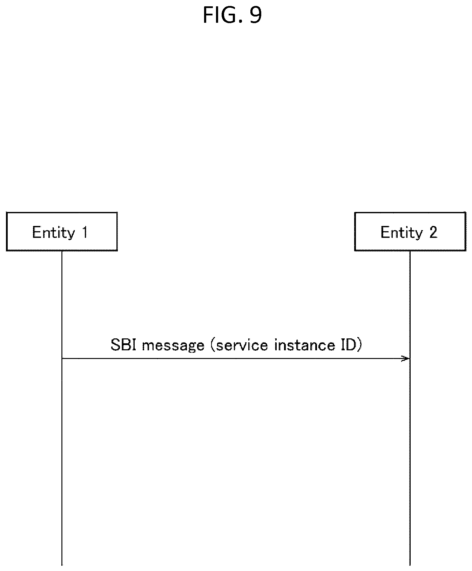

Operation example 2 will be described with reference to Fig. 9. Operation example 2 transmits and receives an identifier of a service instance (service instance ID) used between sub-nodes in the RAN or between a sub-node in the RAN and a function in the CN, specifically, an identifier of a protocol (connection interface). Note that hereinafter, the sub-node in the RAN or the function in the CN is also referred to as an entity.

As shown in Fig. 9, one entity (Entity 1 in the figure) transmits an SBI message to the other entity (Entity 2 in the figure). The SBI message is, for example, a setup request message, a setup response message, a modification request message, or a modification response message of an xx (xx is an arbitrary name) interface. The SBI message may include a service instance ID in a header or a message (body).

### <Case where service instance ID is transmitted and received between sub-nodes in RAN>

The service instance ID may be, for example, an identifier having a role similar to an XnAP ID or an F1AP ID used in the 5G RAN.

### <Case where service instance ID is transmitted and received between sub-node in RAN and function in CN>

The service instance ID may be, for example, an identifier having a role similar to an NGAP ID used between the 5G RAN and the 5GC (for example, an AMF).

### (3.2.3) Operation example 3

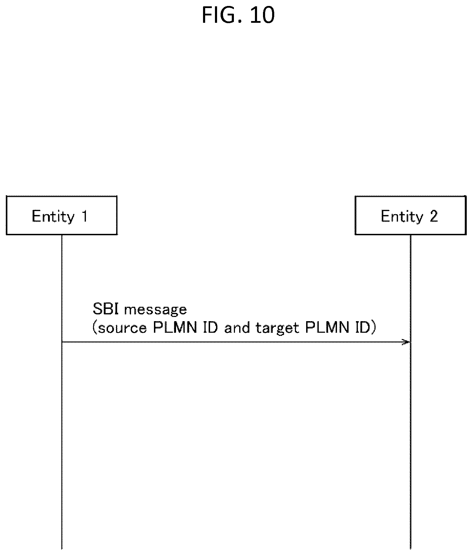

Operation example 3 will be described with reference to Fig. 10. Operation example 3 transmits and receives an identifier (PLMN ID) of a network (Public Land Mobile Network, PLMN) provided by an operator between sub-nodes in the RAN or between a sub-node in the RAN and a function in the CN. Note that hereinafter, the sub-node in the RAN or the function in the CN is also referred to as an entity.

Operation example 3 is based on the premise of RAN sharing in which a plurality of operators share a network. When the UE 200 changes an operator in the same network, the PLMN ID is changed. Along with this, the sub-node in the RAN or the function in the CN needs to recognize an identifier of a PLMN of a transition source of the UE 200 (source PLMN ID) and an identifier of a PLMN of a transition target of the UE 200 (target PLMN ID).

As shown in Fig. 10, one entity (Entity 1 in the figure) transmits an SBI message to the other entity (Entity 2 in the figure). The SBI message is, for example, a setup request message, a setup response message, a modification request message, or a modification response message of an xx (xx is an arbitrary name) interface. The SBI message may include the source PLMN ID and the target PLMN ID in a header or a message (body).

### (4) Functions and effects

According to the embodiment described above, even when an existing node is divided into a plurality of service nodes, it is possible to identify a UE, a service instance, and a network provided by an operator among the service nodes.

In addition, according to the embodiment described above, it is possible to identify a UE, a service instance, and a network provided by an operator also between a service node and a function in the CN. Furthermore, by using the identifier of the UE 200 as an identifier used for a scheduling configuration of the UE 200, it is possible to identify the UE 200 in the 6G RAN without largely changing rules in the existing 5G RAN.

Furthermore, the service node may include a sub-service node obtained by dividing the CU-CP. In this case, it is assumed that the number of service nodes becomes large, but even in such a configuration, the UE 200 can be surely identified among the service nodes.

### (5) Other Embodiments

Although the contents of the present invention have been described above along with the embodiments, the present invention is not limited to these descriptions, and it is obvious to those skilled in the art that various modifications and improvements can be made.

The operation examples described above may be combined and applied in a complex manner as long as no contradiction occurs.

Note that the block diagrams used in the description of the above embodiments show blocks in functional units. Those functional blocks (configuration units) can be realized by any combination of at least one of hardware and software. In addition, the realization method of each functional block is not particularly limited. That is, each functional block may be realized by using one device physically or logically coupled, or two or more devices physically or logically separated may be directly or indirectly connected (for example, by using a wired, wireless, etc.) and realized by using these a plurality of devices. The functional block may be realized by combining the above one device or the above a plurality of devices with software.

Functions include, but are not limited to, judging, determining, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (configuration unit) that causes transmission to function is referred to as a transmitting unit or a transmitter. In any case, as described above, the realization method is not particularly limited.

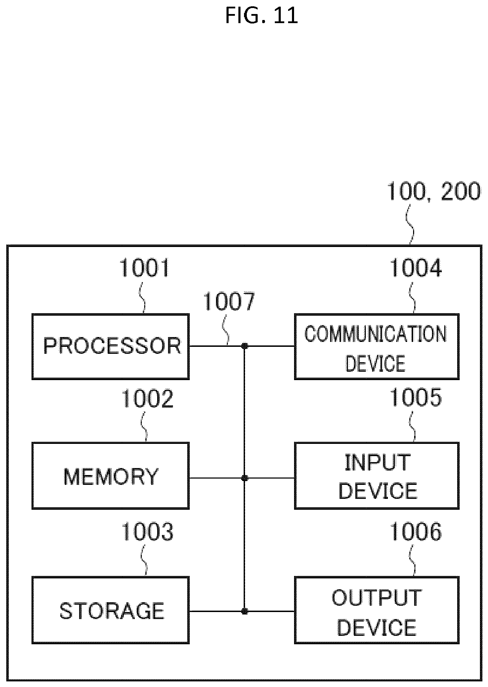

For example, the base station 100, the terminal 200, and the like in one embodiment of the present disclosure may function as a computer that performs processing of the radio communication method of the present disclosure. Fig. 11 is a diagram showing an example of a hardware configuration of the base station 100 and the terminal 200 according to one embodiment of the present disclosure. The base station 100 and the terminal 200 described above may be physically configured as a computer device including a processor 1001, a memory 1002, a storage 1003, a communication device 1004, an input device 1005, an output device 1006, a bus 1007, and the like.

Note that, in the following description, the word "device" can be read as a circuit, a device, a unit, or the like. The hardware configuration of the base station 100 and the terminal 200 may be configured to include one or a plurality of respective devices shown in the figure, or may be configured not to include some of the devices.

Each function in the base station 100 and the terminal 200 is realized by causing the processor 1001 to perform an operation by causing predetermined software (program) to be read on hardware such as the processor 1001 and the memory 1002, and controlling communication by the communication device 1004 and controlling at least one of reading and writing of data in the memory 1002 and the storage 1003.

The processor 1001 operates, for example, an operating system to control the entire computer. The processor 1001 may be configured by a Central Processing Unit (CPU) including an interface with a peripheral device, a control device, an arithmetic device, a register, and the like.

In addition, the processor 1001 reads a program (program code), a software module, data, and the like from at least one of the storage 1003 and the communication device 1004 to the memory 1002, and executes various processing in accordance with them. As the program, a program that causes a computer to execute at least a part of the operations described in the above embodiments is used. Furthermore, although it has been described that the various processing described above are executed by one processor 1001, they may be simultaneously or sequentially executed by two or more processors 1001. The processor 1001 may be implemented by one or more chips. Note that the program may be transmitted from a network via an electric communication line.

The memory 1002 is a computer-readable recording medium, and may be configured by at least one of, for example, a Read Only Memory (ROM), an Erasable Programmable ROM (EPROM), an Electrically Erasable Programmable ROM (EEPROM), a Random Access Memory (RAM), and the like. The memory 1002 may be referred to as a register, a cache, a main memory (main storage device), or the like. The memory 1002 can store a program (program code), a software module, and the like executable to implement the radio communication method according to one embodiment of the present disclosure.

The storage 1003 is a computer-readable recording medium, and may be configured by at least one of, for example, an optical disc such as a Compact Disc ROM (CD-ROM), a hard disk drive, a flexible disk, a magneto-optical disc (for example, a compact disc, a digital versatile disc, a Blu-ray (registered trademark) disc), a smart card, a flash memory (for example, a card, a stick, a key drive), a floppy (registered trademark) disk, a magnetic strip, and the like. The storage 1003 may be referred to as an auxiliary storage device. The storage medium described above may be, for example, a database including at least one of the memory 1002 and the storage 1003, a server, or other appropriate medium.

The communication device 1004 is hardware (transmission and reception device) for performing communication between computers via at least one of a wired network and a radio network, and is also referred to as, for example, a network device, a network controller, a network card, a communication module, or the like. The communication device 1004 may be configured to include a high-frequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, and the like) that receives an input from the outside. The output device 1006 is an output device (for example, a display, a speaker, an LED lamp, and the like) that implements an output to the outside. Note that the input device 1005 and the output device 1006 may have an integrated configuration (for example, a touch panel).

In addition, respective devices such as the processor 1001 and the memory 1002 are connected by the bus 1007 for communicating information. The bus 1007 may be configured using a single bus, or may be configured using a different bus for each device.

In addition, the base station 100 and the terminal 200 may be configured to include hardware such as a microprocessor, a Digital Signal Processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented using at least one of these hardware.

The notification of information is not limited to the aspects/embodiments described in the present disclosure, and may be performed using other methods. For example, the notification of information may be implemented by physical layer signaling (for example, Downlink Control Information (DCI), Uplink Control Information (UCI)), higher layer signaling (for example, Radio Resource Control (RRC) signaling, Medium Access Control (MAC) signaling), broadcast information (Master Information Block (MIB), System Information Block (SIB)), other signals, or combinations thereof. In addition, the RRC signaling may be referred to as an RRC message, and may be, for example, an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), New radio access (NX), Future generation radio access (FX), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems utilizing other appropriate systems, and next-generation systems extended, modified, created, or specified based on these. In addition, a plurality of systems may be combined (for example, a combination of at least one of LTE and LTE-A and 5G, and the like) and applied.

The order of the processing procedures, sequences, flowcharts, and the like of each aspect/embodiment described in the present disclosure may be interchanged as long as there is no contradiction. For example, regarding the method described in the present disclosure, elements of various steps are presented using an exemplary order, and the method is not limited to the presented specific order.

A specific operation described as being performed by the base station in the present disclosure may be performed by an upper node thereof in some cases. In a network consisting of one or a plurality of network nodes having a base station, it is obvious that various operations performed for communication with a terminal can be performed by at least one of the base station and other network nodes other than the base station (for example, an MME, an S-GW, or the like can be considered, but are not limited thereto). Although the case where there is one other network node other than the base station has been shown above, it may be a combination of a plurality of other network nodes (for example, an MME and an S-GW).

Information, signals (information and the like) can be output from a higher layer (or a lower layer) to a lower layer (or a higher layer). They may be input and output via a plurality of network nodes.

The input and output information and the like may be stored in a specific location (for example, a memory), or may be managed using a management table. The input and output information and the like can be overwritten, updated, or additionally written. The output information and the like may be deleted. The input information and the like may be transmitted to another device.

The determination may be performed by a value represented by one bit (0 or 1), may be performed by a true or false value (Boolean: true or false), or may be performed by comparison of numerical values (for example, comparison with a predetermined value).

Each aspect/embodiment described in the present disclosure may be used alone, may be used in combination, or may be switched and used in accordance with execution. In addition, notification of predetermined information (for example, notification of "being X") is not limited to being performed explicitly, and may be performed implicitly (for example, not performing notification of the predetermined information).

Software should be broadly interpreted to mean instructions, instruction sets, code, code segments, program code, programs, subprograms, software modules, applications, software applications, software packages, routines, subroutines, objects, executable files, execution threads, procedures, functions, and the like, regardless of whether they are called software, firmware, middleware, microcode, hardware description language, or other names.

In addition, software, instructions, information, and the like may be transmitted and received via a transmission medium. For example, when software is transmitted from a website, a server, or another remote source using at least one of wired technology (coaxial cable, optical fiber cable, twisted pair, Digital Subscriber Line (DSL), and the like) and wireless technology (infrared, microwave, and the like), at least one of these wired technology and wireless technology is included in the definition of the transmission medium.

Information, signals, and the like described in the present disclosure may be represented using any of a variety of different technologies. For example, data, instructions, commands, information, signals, bits, symbols, chips, and the like that may be referred to throughout the above description may be represented by voltages, currents, electromagnetic waves, magnetic fields or magnetic particles, optical fields or photons, or any combination thereof.

Note that terms described in the present disclosure and terms necessary for understanding the present disclosure may be replaced with terms having the same or similar meanings. For example, at least one of a channel and a symbol may be a signal (signaling). In addition, a signal may be a message. In addition, a Component Carrier (CC) may be referred to as a carrier frequency, a cell, a frequency carrier, or the like.

The terms "system" and "network" used in the present disclosure are used interchangeably.

In addition, information, parameters, and the like described in the present disclosure may be represented using an absolute value, may be represented using a relative value from a predetermined value, or may be represented using another corresponding information. For example, radio resources may be indicated by an index.

Names used for the parameters described above are not limiting in any respect. Furthermore, mathematical formulas and the like using these parameters may differ from those explicitly disclosed in the present disclosure. Various channels (for example, a PUCCH, a PDCCH, and the like) and information elements can be identified by any suitable names, and therefore various names assigned to these various channels and information elements are not limiting names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier" and the like can be used interchangeably. A base station may also be referred to by terms such as a macro cell, a small cell, a femto cell, and a pico cell.

A base station can accommodate one or a plurality of (for example, three) cells (also referred to as sectors). When a base station accommodates a plurality of cells, the entire coverage area of the base station can be partitioned into a plurality of smaller areas, and each smaller area can also provide a communication service through a base station subsystem (for example, a small indoor base station (Remote Radio Head, RRH)). The term "cell" or "sector" refers to a part or the whole of a coverage area of at least one of a base station and a base station subsystem that performs a communication service in this coverage.

In the present disclosure, transmitting information from a base station to a terminal may be read as instructing control and operations based on the information from the base station to the terminal.

In the present disclosure, terms such as "terminal", "user terminal", "Mobile Station (MS)", and "User Equipment (UE)" can be used interchangeably.

A mobile station may be referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terminology.

At least one of a base station and a mobile station may be referred to as a transmission device, a reception device, a communication device, or the like. Note that at least one of a base station and a mobile station may be a device mounted on a moving body, the moving body itself, or the like. The moving body refers to a movable object, and a moving speed is arbitrary. In addition, a case where the moving body is stationary is naturally included. The moving body includes, for example, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, an airplane, a rocket, a satellite, a drone (registered trademark), a multicopter, a quadcopter, a balloon, and an object mounted thereon, but is not limited thereto. In addition, the moving body may be a moving body that travels autonomously based on an operation command. It may be a vehicle (for example, a car, an airplane, and the like), a moving body that moves unmanned (for example, a drone, an autonomous driving vehicle, and the like), or a robot (manned or unmanned). Note that at least one of a base station and a mobile station also includes a device that does not necessarily move during a communication operation. For example, at least one of a base station and a mobile station may be an Internet of Things (IoT) device such as a sensor.

In addition, the base station in the present disclosure may be read as a terminal. For example, each aspect/embodiment of the present disclosure may be applied to a configuration in which communication between a base station and a terminal is replaced with communication among a plurality of terminals (for example, which may be referred to as Device-to-Device (D2D), Vehicle-to-Everything (V2X), and the like). In this case, a configuration in which the terminal 200 has the functions of the base station 100 described above may be employed. In addition, words such as "uplink" and "downlink" may be read as words corresponding to terminal-to-terminal communication (for example, "side"). For example, an uplink channel, a downlink channel, and the like may be read as a side channel.

Similarly, the terminal in the present disclosure may be read as a base station. In this case, a configuration in which the base station 100 has the functions of the terminal 200 described above may be employed.

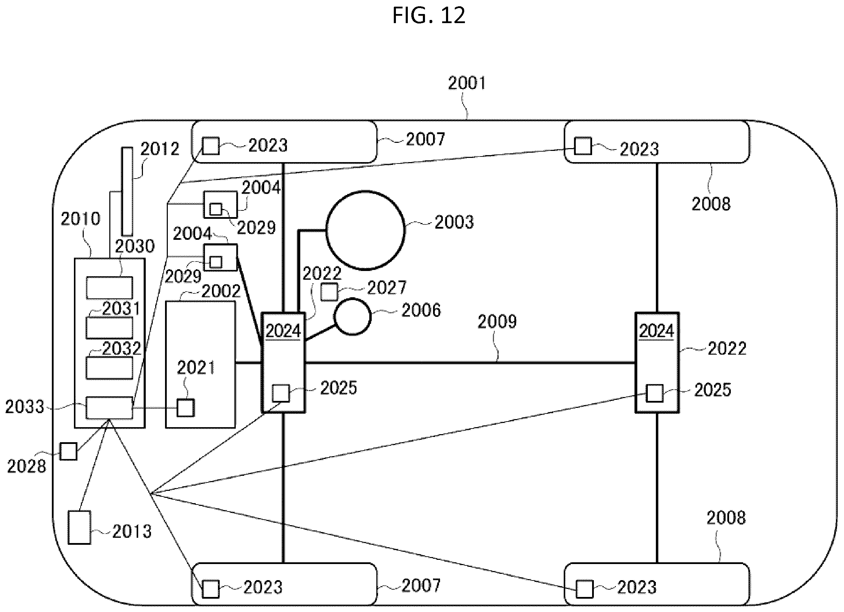

Fig. 12 illustrates a configuration example of a vehicle 2001. As shown in Fig. 12, the vehicle 2001 comprises a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is configured by, for example, an engine, a motor, or a hybrid of an engine and a motor.

The steering unit 2003 includes at least a steering wheel (also referred to as a handle), and is configured to steer at least one of the front wheels and the rear wheels based on an operation of the steering wheel operated by a user.

The electronic control unit 2010 is configured by a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be referred to as an Electronic Control Unit (ECU).

Examples of the signals from the various sensors 2021 to 2029 include a current signal from a current sensor 2021 that senses a current of a motor, a rotation speed signal of the front wheels or the rear wheels acquired by a rotation speed sensor 2022, an air pressure signal of the front wheels or the rear wheels acquired by an air pressure sensor 2023, a vehicle speed signal acquired by a vehicle speed sensor 2024, an acceleration signal acquired by an acceleration sensor 2025, a depression amount signal of the accelerator pedal acquired by an accelerator pedal sensor 2029, a depression amount signal of the brake pedal acquired by a brake pedal sensor 2026, an operation signal of the shift lever acquired by a shift lever sensor 2027, and a detection signal for detecting an obstacle, a vehicle, a pedestrian, and the like acquired by an object detection sensor 2028.

The information service unit 2012 is configured by various devices for providing (outputting) various information such as driving information, traffic information, and entertainment information, such as a car navigation system, an audio system, a speaker, a television, and a radio, and one or more ECUs that control these devices. The information service unit 2012 provides various multimedia information and multimedia services to occupants of the vehicle 2001 using information acquired from an external device via the communication module 2013 or the like.

The information service unit 2012 may include an input device (for example, a keyboard, a mouse, a microphone, a switch, a button, a sensor, a touch panel, and the like) that receives an input from the outside, and may include an output device (for example, a display, a speaker, an LED lamp, a touch panel, and the like) that implements an output to the outside.

The driver assistance system unit 2030 is configured by various devices for providing a function for preventing an accident in advance and reducing a driving load of a driver, such as a millimeter wave radar, a Light Detection and Ranging (LiDAR), a camera, a positioning locator (for example, a GNSS, etc.), map information (for example, a high definition (HD) map, an autonomous vehicle (AV) map, etc.), a gyro system (for example, an Inertial Measurement Unit (IMU), an Inertial Navigation System (INS), etc.), an Artificial Intelligence (AI) chip, and an AI processor, and one or more ECUs that control these devices. In addition, the driver assistance system unit 2030 transmits and receives various information via the communication module 2013, and realizes a driver assistance function or an autonomous driving function.

The communication module 2013 can communicate with the microprocessor 2031 and components of the vehicle 2001 via the communication port. For example, the communication module 2013 transmits and receives data to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2029, which are provided in the vehicle 2001, via the communication port 2033.

The communication module 2013 is a communication device that is controllable by the microprocessor 2031 of the electronic control unit 2010 and capable of communicating with an external device. For example, it transmits and receives various information to and from an external device via radio communication. The communication module 2013 may be inside or outside the electronic control unit 2010. The external device may be, for example, a base station, a mobile station, or the like.

The communication module 2013 may transmit at least one of signals from the various sensors 2021 to 2029 input to the electronic control unit 2010, information obtained based on the signals, and information based on an input from an outside (user) obtained via the information service unit 2012 to an external device via radio communication. The electronic control unit 2010, the various sensors 2021 to 2029, the information service unit 2012, and the like may be referred to as an input unit that receives an input. For example, a PUSCH transmitted by the communication module 2013 may include information based on the input.

The communication module 2013 receives various information (traffic information, signal information, inter-vehicle information, and the like) transmitted from an external device, and displays it on the information service unit 2012 provided in the vehicle. The information service unit 2012 may be referred to as an output unit that outputs information (for example, outputs information to a device such as a display and a speaker based on a PDSCH (or data/information decoded from the PDSCH) received by the communication module 2013).

In addition, the communication module 2013 stores various information received from the external device in the memory 2032 that can be used by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2029, and the like provided in the vehicle 2001.

The terms "determining" and "deciding" used in the present disclosure may encompass a wide variety of operations. "Determining" and "deciding" may include, for example, considering judging, calculating, computing, processing, deriving, investigating, looking up, search, inquiry (for example, looking up in a table, database, or another data structure), and ascertaining as "determining" and "deciding". Also, "determining" and "deciding" may include considering receiving (for example, receiving information), transmitting (for example, transmitting information), input, output, and accessing (for example, accessing data in memory) as "determining" and "deciding". Also, "determining" and "deciding" may include considering resolving, selecting, choosing, establishing, comparing, and the like as "determining" and "deciding". That is, "determining" and "deciding" may include considering some operation as "determining" and "deciding". In addition, "determining (deciding)" may be read as "assuming", "expecting", "considering", and the like.

The terms "connected" and "coupled", or any variation thereof, mean any direct or indirect connection or coupling between two or more elements, and can include the presence of one or more intermediate elements between two elements that are "connected" or "coupled" to each other. The coupling or connection between elements may be physical, logical, or a combination thereof. For example, "connection" may be read as "access". When used in the present disclosure, two elements can be considered to be "connected" or "coupled" to each other using at least one of one or more wires, cables, and printed electrical connections, and as some non-limiting and non-inclusive examples, using electromagnetic energy having wavelengths in a radio frequency region, a microwave region, and a light (both visible and invisible) region, and the like.

A reference signal can be abbreviated as an RS, and may be referred to as a pilot depending on the standard applied.

The description "based on" used in the present disclosure does not mean "based only on" unless specifically stated otherwise. In other words, the description "based on" means both "based only on" and "based at least on".

Any reference to elements using designations such as "first", "second", and the like used in the present disclosure generally does not limit the amount or order of those elements. These designations can be used in the present disclosure as a convenient method to distinguish between two or more elements. Accordingly, reference to the first and second elements does not imply that only two elements can be adopted, or that the first element must precede the second element in some manner.

"Means" in the configuration of each device above may be replaced with "unit", "circuit", "device", and the like.

When "include", "including", and variations thereof are used in the present disclosure, these terms are intended to be inclusive similarly to the term "comprising". Furthermore, the term "or" used in the present disclosure is intended not to be an exclusive OR.

A radio frame may be configured by one or a plurality of frames in a time domain. Each of one or a plurality of frames in the time domain may be referred to as a subframe. A subframe may be further configured by one or a plurality of slots in the time domain. A subframe may have a fixed time length (for example, 1 ms) that does not depend on a numerology.

A numerology may be a communication parameter applied to at least one of transmission and reception of a certain signal or channel. A numerology may indicate at least one of, for example, a SubCarrier Spacing (SCS), a bandwidth, a symbol length, a cyclic prefix length, a Transmission Time Interval (TTI), the number of symbols per TTI, a radio frame configuration, a specific filtering process performed by a transceiver in a frequency domain, a specific windowing process performed by a transceiver in a time domain, and the like.

A slot may be configured by one or a plurality of symbols (Orthogonal Frequency Division Multiplexing (OFDM) symbols, Single Carrier Frequency Division Multiple Access (SC-FDMA) symbols, and the like) in a time domain. A slot may be a time unit based on a numerology.

A slot may include a plurality of mini-slots. Each mini-slot may be configured by one or a plurality of symbols in a time domain. In addition, a mini-slot may be referred to as a sub-slot. A mini-slot may be configured by a smaller number of symbols than a slot. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all represent a time unit when transmitting a signal. A radio frame, a subframe, a slot, a mini-slot, and a symbol may use other corresponding names, respectively.

For example, one subframe may be referred to as a Transmission Time Interval (TTI), a plurality of continuous subframes may be referred to as a TTI, and one slot or one mini-slot may be referred to as a TTI. That is, at least one of a subframe and a TTI may be a subframe (1 ms) in the existing LTE, may be a period shorter than 1 ms (for example, 1 to 13 symbols), or may be a period longer than 1 ms. Note that a unit representing a TTI may be referred to as a slot, a mini-slot, or the like instead of a subframe.

Here, a TTI refers to, for example, a minimum time unit of scheduling in radio communication. For example, in the LTE system, a base station performs scheduling to allocate radio resources (frequency bandwidth, transmission power, and the like that can be used in each terminal) to each terminal in units of TTIs. Note that the definition of a TTI is not limited to this.

A TTI may be a transmission time unit of a channel-coded data packet (transport block), a code block, a codeword, or the like, or may be a processing unit of scheduling, link adaptation, or the like. Note that, when a TTI is given, a time interval (for example, the number of symbols) to which a transport block, a code block, a codeword, or the like is actually mapped may be shorter than the TTI.

Note that, when one slot or one mini-slot is referred to as a TTI, one or more TTIs (that is, one or more slots or one or more mini-slots) may be a minimum time unit of scheduling. In addition, the number of slots (the number of mini-slots) configuring the minimum time unit of scheduling may be controlled.

A TTI having a time length of 1 ms may be referred to as a normal TTI (TTI in LTE Rel. 8 to 12), a normal TTI, a long TTI, a normal subframe, a normal subframe, a long subframe, a slot, or the like. A TTI shorter than a normal TTI may be referred to as a shortened TTI, a short TTI, a partial TTI (partial or fractional TTI), a shortened subframe, a short subframe, a mini-slot, a sub-slot, a slot, or the like.

Note that a long TTI (for example, a normal TTI, a subframe, and the like) may be read as a TTI having a time length exceeding 1 ms, and a short TTI (for example, a shortened TTI, and the like) may be read as a TTI having a TTI length less than a TTI length of a long TTI and having a TTI length of 1 ms or more.

A Resource Block (RB) is a resource allocation unit in a time domain and a frequency domain, and may include one or a plurality of continuous subcarriers in the frequency domain. The number of subcarriers included in an RB may be the same regardless of a numerology, and may be, for example, 12. The number of subcarriers included in an RB may be determined based on a numerology.

In addition, a time domain of an RB may include one or a plurality of symbols, and may have a length of one slot, one mini-slot, one subframe, or one TTI. One TTI, one subframe, and the like may each be configured by one or a plurality of resource blocks.

Note that one or a plurality of RBs may be referred to as a Physical Resource Block (Physical RB, PRB), a Sub-Carrier Group (SCG), a Resource Element Group (REG), a PRB pair, an RB pair, or the like.

In addition, a resource block may be configured by one or a plurality of Resource Elements (REs). For example, 1 RE may be a radio resource region of 1 subcarrier and 1 symbol. A Bandwidth Part (BWP) (which may be referred to as a partial bandwidth, and the like) may represent a subset of contiguous common resource blocks (common RBs) for a certain numerology in a certain carrier. Here, a common RB may be specified by an index of an RB based on a common reference point of the carrier. A PRB may be defined in a certain BWP and numbered within the BWP.

The BWP may include a BWP for UL (UL BWP) and a BWP for DL (DL BWP). One or a plurality of BWPs may be configured for a UE within one carrier.

At least one of configured BWPs may be active, and a UE does not have to assume to transmit and receive a predetermined signal/channel outside an active BWP. Note that "cell", "carrier", and the like in the present disclosure may be read as "BWP".

The structures of a radio frame, a subframe, a slot, a mini-slot, a symbol, and the like described above are merely examples. For example, configurations such as the number of subframes included in a radio frame, the number of slots per subframe or radio frame, the number of mini-slots included in a slot, the number of symbols and RBs included in a slot or a mini-slot, the number of subcarriers included in an RB, the number of symbols in a TTI, a symbol length, a Cyclic Prefix (CP) length, and the like can be variously changed.

The "maximum transmit power" described in the present disclosure may mean a maximum value of transmit power, may mean a nominal UE maximum transmit power, or may mean a rated UE maximum transmit power.

In the present disclosure, for example, when articles are added by translation, such as a, an, and the in English, the present disclosure may include that a noun following these articles is plural.

In the present disclosure, the term "A and B are different" may mean that "A and B are different from each other". Note that the term may mean that "A and B are each different from C". Terms such as "leave", "coupled", and the like may also be interpreted similarly to "different".

Although the present disclosure has been described in detail above, it is obvious to those skilled in the art that the present disclosure is not limited to the embodiments described in the present disclosure. The present disclosure can be implemented as modified and changed aspects without departing from the spirit and scope of the present disclosure defined by the descriptions of the claims. Accordingly, the description of the present disclosure is intended for illustrative purposes, and does not have any limiting meaning to the present disclosure.

### (Supplementary Note)

The disclosure described above may be expressed as follows.

A first feature is a service node comprising: a control unit that controls, in a radio access network divided in units of services, communication with another service node connected to the service node, which is a unit providing the service; and a transmission unit that transmits an identifier to the other service node, wherein at least one of the service node or the other service node includes a control service node in which a control plane of a central unit centrally controlling the radio access network is divided in units of services, and the transmission unit transmits, as the identifier, a first identifier with which the service node identifies a terminal and a second identifier with which the other service node identifies the terminal.

A second feature is the service node according to the first feature, wherein the transmission unit transmits the first identifier and the second identifier to a core network connected to the radio access network.

A third feature is the service node according to the first or second feature, wherein the transmission unit transmits the first identifier and the second identifier used for scheduling configuration of the terminal.

A fourth feature is the service node according to any one of the first to third features, wherein the service node includes the control service node.

A fifth feature is a service node comprising: a control unit that controls, in a radio access network divided in units of services, communication with another service node connected to the service node, which is a unit providing the service; and a transmission unit that transmits an identifier to the other service node, wherein at least one of the service node or the other service node includes a control service node in which a control plane of a central unit centrally controlling the radio access network is divided in units of services, and the transmission unit transmits, as the identifier, an identifier of an interface used for the communication.

A sixth feature is a service node comprising: a control unit that controls, in a radio access network divided in units of services, communication with another service node connected to the service node, which is a unit providing the service; and a transmission unit that transmits an identifier to the other service node, wherein at least one of the service node or the other service node includes a control service node in which a control plane of a central unit centrally controlling the radio access network is divided in units of services, and the transmission unit transmits, as the identifier, an identifier of a network provided by an operator of a transition source of a terminal and an identifier of a network provided by an operator of a transition target of the terminal.

### DESCRIPTION OF REFERENCE NUMERALS

10 Radio communication system
20 RAN
30 CN
100 Base station
110 Radio signal transmission/reception unit
120 Amplifier unit
130 Modulation/demodulation unit
140 Control signal/reference signal processing unit
150 Encoding/decoding unit
160 Data transmission/reception unit
170 Control unit
200 Terminal
210 Radio signal transmission/reception unit
220 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driver assistance system unit
2031 Microprocessor
2032 Memory (ROM, RAM)
2033 Communication port (IO port)

## Claims

1. A service node comprising:
a control unit that controls, in a radio access network divided in units of services, communication with another service node connected to the service node, which is a unit providing the service; and
a transmission unit that transmits an identifier to the other service node, wherein
at least one of the service node or the other service node includes a control service node in which a control plane of a central unit centrally controlling the radio access network is divided in units of services, and
the transmission unit transmits, as the identifier, a first identifier with which the service node identifies a terminal and a second identifier with which the other service node identifies the terminal.

2. The service node according to claim 1, wherein the transmission unit transmits the first identifier and the second identifier to a core network connected to the radio access network.

3. The service node according to claim 1, wherein the transmission unit transmits the first identifier and the second identifier used for scheduling configuration of the terminal.

4. The service node according to claim 1, wherein the service node includes the control service node.

5. A service node comprising:
a control unit that controls, in a radio access network divided in units of services, communication with another service node connected to the service node, which is a unit providing the service; and
a transmission unit that transmits an identifier to the other service node, wherein
at least one of the service node or the other service node includes a control service node in which a control plane of a central unit centrally controlling the radio access network is divided in units of services, and
the transmission unit transmits, as the identifier, an identifier of an interface used for the communication.

6. A service node comprising:
a control unit that controls, in a radio access network divided in units of services, communication with another service node connected to the service node, which is a unit providing the service; and
a transmission unit that transmits an identifier to the other service node, wherein
at least one of the service node or the other service node includes a control service node in which a control plane of a central unit centrally controlling the radio access network is divided in units of services, and
the transmission unit transmits, as the identifier, an identifier of a network provided by an operator of a transition source of a terminal and an identifier of a network provided by an operator of a transition target of the terminal.
